# DEMANDE DE BREVET EUROPEEN

(11) **EP 4 783 033 A1**
(43) Date de publication de la demande: **29.07.2026**
(21) Numéro de dépôt: 26152082.9
(22) Date de dépôt: 15.01.2026
(51) Int. Cl.: G06F 16/953

(54) **PROCÉDÉ DE GESTION DE LA RECHERCHE DE DOCUMENTS**

(30) Priorité: 22.01.2025 FR 2500656
(71) Demandeur: Orange, 92130 Issy-les-Moulineaux (FR)
(72) Inventeur: MONCOMBLE, Ghislain, 92326 Chatillon (FR); HEINECKE, Johannes, 92326 Chatillon (FR)

(57) **Abrégé**

L'invention se rapporte à un procédé de gestion de la recherche de documents (D1 à D4) parmi un ensemble (E) de documents, les documents étant indexés (I1 à I4), le procédé comprenant :
- obtenir une deuxième liste (L2) de documents à partir d'une première liste (L1) de documents en prenant en compte un concept (C1 à C4) présent dans un document (D1 à D4) de la première liste, les documents de la première liste résultant d'une recherche par index parmi l'ensemble (E) de documents.

## Description

### Domaine technique

Le domaine technique est celui de la recherche d'informations.

Plus précisément, l'invention se rapporte à un procédé de gestion de la recherche de documents parmi un ensemble de documents. La recherche de documents en question se fait par exemple sur Internet ou bien parmi un ensemble de documents fixé au préalable tel qu'un ensemble de petites annonces ou de dépêches d'agences d'informations ou tout autre ensemble de documents.

### État de la technique

A partir des années 90, l'émergence d'Internet et du Web s'accompagne de l'apparition de moteurs de recherche permettant à des utilisateurs de trouver des documents parmi la masse de documents présents sur le Web. Les premiers moteurs de recherche (Altavista, Lycos etc.) étaient de type « nomenclature », c'est-à-dire que chaque document présent dans le moteur de recherche était rattaché à une liste hiérarchique de sujets. En déroulant les listes, et en affinant le sujet recherché, l'utilisateur finissait par arriver aux documents qui lui convenait.

Cette approche est devenue inutilisable au vu de l'explosion exponentielle du nombre de documents accessibles sur Internet. Elle reste cependant populaire pour des domaines précis. Par exemple, des sites de petites annonces peuvent organiser ainsi la recherche dans leur base de petites annonces. Cependant, la quasi-totalité des moteurs de recherche actuels fonctionnent sur le principe de l'indexation des contenus de documents par des robots logiciels et de la comparaison des index obtenus avec des termes de recherche fournis par l'utilisateur pour proposer les documents les plus pertinents selon un algorithme de classement. Les algorithmes de classement peuvent faire intervenir d'autres considérations, comme le nombre de documents pointant vers un document donné. Un document plus populaire sera davantage mis en avant qu'un autre.

Les algorithmes de recherche de documents par indexation de mots-clés, que ce soit sur le Web ou sur des ensembles restreints de documents, sont bien connus et présentent des avantages certains. On peut quand même citer les défauts suivants aux techniques actuelles :
- Le classement par score ne va pas forcément mettre en avant le document le plus pertinent. En effet, on a vu que l'algorithme de classement peut utiliser des informations telles que la popularité du site où se trouve le document pour le mettre plus ou moins en avant. Un document plus complet qu'un autre pour répondre à une recherche donnée peut se retrouver moins bien classé à cause de sa moins grande visibilité.
- Un deuxième défaut des algorithmes existants est la présentation de nombreux doublons. En effet, les techniques de publication modernes incitent les éditeurs à publier à de nombreuses reprises des documents quasi identiques afin de multiplier leur visibilité. Les moteurs de recherche ont du mal à différencier ces doublons et vont afficher aux utilisateurs des documents très proches, qui n'apportent pas d'informations utiles.
- Un troisième défaut des algorithmes existants est qu'ils ne prennent pas en compte les notions ou sujets sous-jacents aux termes de la recherche demandée. Ces algorithmes vont donc écarter des résultats des documents véhiculant des informations similaires mais exprimées avec des termes différents de ceux de la recherche de l'utilisateur. Ce problème est exacerbé par la présence de nombreux doublons qui vont prendre la place de documents différents, portant sur le même sujet. Autrement dit, la présence de nombreux doublons cache à l'utilisateur des documents pertinents qui sont remontés par l'algorithme de recherche à un niveau moins élevé.

Ces inconvénients sont accrus par les stratégies de publication suivies par certains éditeurs de contenu. Des éditeurs publient un grand nombre de documents identiques, ce qui ne coûte pas cher en terme de coût de rédaction, puis cherchent par des astuces de présentation à tromper les moteurs de recherche qui cherchent à limiter les doublons. De cette manière, ces éditeurs disposent d'une grande visibilité à moindre coût.

L'invention vient améliorer la situation.

### Exposé de l'invention

Selon un premier aspect fonctionnel, l'invention a trait à un procédé de gestion de la recherche de documents parmi un ensemble de documents, les documents étant indexés, le procédé comprenant :
- obtenir une deuxième liste de documents à partir d'une première liste de documents en prenant en compte un concept présent dans un document de la première liste, les documents de la première liste résultant d'une recherche par index parmi l'ensemble de documents.

Grâce à l'invention, les résultats d'une recherche classique de documents à la suite d'une requête de recherche par index sont améliorés en utilisant les concepts présents dans les documents. Les concepts présents dans les documents correspondent aux sujets traités par les documents. La découverte des concepts présents dans les documents est le résultat d'une recherche utilisant des techniques d'analyse sémantique. L'utilisation des concepts présents dans les documents permet de réaliser une recherche qui ne s'arrête pas aux aspects syntaxiques des documents, mais prend également en compte leurs aspects sémantiques. En particulier, des documents qui utilisent des termes différents mais qui traitent de sujets identiques seront ainsi rapprochés, ce qui permettra de répondre aux défauts des algorithmes de recherche de l'état de l'art énoncés ci-dessus :
- Le document le plus pertinent du point de vue sémantique pourra être mis en avant. En particulier, les documents comprenant de façon la plus complète l'ensemble des différents concepts rattachés à un sujet pourra être mis en avant.
- Le procédé permet bien d'éviter les doublons puisque, à concepts identiques présents dans différents documents, un seul peut être conservé.
- Le procédé permet bien de retrouver les différents documents traitant d'un même sujet même quand ils utilisent des termes différents pour cela puisque la recherche de concepts présents dans les documents permet de mettre en avant ces mêmes sujets.

La recherche de documents selon l'invention se fait par exemple sur le Web mais peut aussi se faire dans un ensemble limité de documents, mais qui reste de grande taille, par exemple un ou plusieurs sites de petites annonces ou bien un ensemble d'articles de presse ou de dépêches d'agence provenant d'un ou plusieurs sites d'information.

Selon un mode de réalisation, qui peut être réalisé alternativement ou cumulativement avec cet aspect fonctionnel, l'obtention de de la deuxième liste de documents est fonction de données représentatives de concepts présents dans les documents de la première liste.

La découverte de concepts présents dans les documents se fait en utilisant diverses techniques d'analyse sémantique. Les données représentatives des concepts présents dans les documents peuvent être de plusieurs types différents.

Un premier exemple de données représentatives de concepts sont des classifications ou des éléments de classifications. Une classification est un ensemble de termes, regroupés de manière hiérarchique, qui permettent de décrire de façon exhaustive les différents objets possibles d'un domaine. Par exemple, les différentes activités économiques sont décrites par l'Union Européenne dans une classification dénommée NACE, acronyme pour *Nomenclature statistique des Activités économiques dans la Communauté Européenne.* Dans un autre exemple, la classification décimale de Dewey (CDD) est un système visant à classer l'ensemble du fonds documentaire d'une bibliothèque.

Les sites de petites annonces ou de dépêches d'agence présentent naturellement des classifications des documents qui sont présents parmi eux, en indiquant par exemple quelles sont les catégories d'objets vendus ou les sujets des dépêches d'agence. Ces classifications initiales peuvent être complétées par des analyses sémantiques du texte des documents. Par exemple, une dépêche d'agence classée en « économie » peut être analysée pour voir qu'un sujet plus précis de la dépêche est la présentation de résultats financiers, pour une entreprise en particulier, pour une année en particulier et avec des caractéristiques complémentaires de plus en plus détaillées.

Un autre exemple de données représentatives de concepts sont les instances de concepts exprimées dans un langage de représentation sémantique. Un tel langage est par exemple le langage AMR, acronyme de l'anglais *Abstract Meaning Representation.* Un autre langage de représentation sémantique est le langage OWL, acronyme de l'anglais *Web Ontology Language,* qui est standardisé par le W3C (*World Wide Web Consortium*). Des outils d'analyse textuelles peuvent produire à partir des documents des instances de concepts présents dans les documents représentées dans ces différents langages.

Un autre exemple de données représentatives de concepts sont les plongements (traduction de l'anglais *embeddings*) qui peuvent être obtenus par l'analyse de documents (textes ou images) par des techniques d'intelligence artificielle générative. Les plongements sont des vecteurs de nombres réels qui représentent de façon implicite des concepts sémantiques, issus par exemple de l'apprentissage de réseaux de neurones artificiels soumis à un apprentissage. Les plongements peuvent être obtenus pour des parties plus ou moins grandes de documents et pour des documents de nature textuelle ou imagée.

Pour approfondir l'exemple des classifications, qui ne sont cependant pas le seul exemple de données représentatives de concepts pouvant être utilisées, quand les documents considérés sont des petites annonces, la classification indiquera de façon hiérarchique si l'annonce consiste en une offre d'achat, de vente, ou de location et si l'objet recherché ou proposé est un bien immobilier ou mobilier, s'il s'agit d'un bien immobilier, s'il s'agit d'une maison ou d'un appartement etc. Des caractéristiques supplémentaires de prix, de localisation, ou autres sont également présentes dans des classifications supplémentaires.

Dans un autre exemple, quand les documents sont des dépêches d'agence, les classifications associées à la source de l'information indiqueront par exemple si les dépêches traitent de sujets politiques ou économiques ou autres ; la localisation géographique du sujet traité ; les personnages dont il est question ; l'entreprise dont il est question ; les données financières dont il est question etc. Là encore, on comprend aisément que plusieurs classifications peuvent être associées à un même document.

Pour obtenir les concepts présents dans les documents, qui correspondent aux sujets traités par les documents, des techniques d'intelligence artificielle d'analyse de documents peuvent être utilisées. Ces techniques d'analyse sémantique peuvent extraire les sujets traités d'un document en prenant en compte les mots clés présents dans les documents, leurs synonymes, ainsi qu'en réalisant des analyses grammaticales des textes des documents ou bien des analyses des images pouvant être présentes dans les documents.

Dans le cas des classifications des sujets traités, celles-ci peuvent être arrangées dans des nomenclatures, c'est-à-dire des listes fermées de sujets possibles, utilisant des termes standardisés pour les décrire ; il est donc possible alors de comparer exactement entre eux les sujets traités par tel ou tel document. Selon cette comparaison entre eux des sujets exacts traités par les documents, la liste obtenue par une recherche classique de documents sera réorganisée afin de mettre en avant les documents les plus utiles pour l'utilisateur.

Dans un mode de réalisation, qui peut être réalisé alternativement ou cumulativement avec les modes précédents, le procédé comprend :
- associer à au moins un document de l'ensemble des documents au moins une donnée représentative de concepts présents dans ledit document.

Grâce à ce mode de réalisation, une association est créée entre les documents et les concepts qui sont présents dans chaque document. Cette association permet de manipuler aisément les documents et les concepts présents dans les documents.

Dans un mode de réalisation, qui peut être réalisé alternativement ou cumulativement avec les modes précédents, l'étape d'association comprend le regroupement de plusieurs documents quand un même concept est présent dans lesdits plusieurs documents.

Grâce à ce mode de réalisation, l'association explicite d'une donnée représentative d'un concept avec un document dans lequel le concept est présent peut être évitée. Plutôt que de réaliser une association explicite, les documents présentant des concepts identiques ou similaires vont être regroupés, afin de prendre en compte ultérieurement le fait qu'ils traitent de concepts identiques. Les concepts peuvent être jugés identiques ou similaires quand leurs données représentatives sont identiques (par exemple s'il s'agit de classifications) ou suffisamment proches selon une distance prenant en compte la notion de proximité sémantique (par exemple, dans le cas des plongements, la similarité cosinus entre vecteurs).

Dans un mode de réalisation, les classifications ne sont pas définies au préalable. Dans ce mode, l'analyse sémantique des documents elle-même va extraire les sujets et les lister de façon unifiée, associés aux documents analysés. Dans un mode de réalisation, l'analyse sémantique utilise une classification définie au préalable et la complète par de nouveaux sujets révélés par l'analyse sémantique. Ici, une classification initiale sert de point de départ pour classifier les documents considérés mais cette classification n'est pas figée. L'analyse sémantique pourra découvrir des sujets traités absents de la classification initiale et enrichir celle-ci en rajoutant le sujet découvert à la classification initiale, de façon cohérente avec la hiérarchie des sujets recensés dans la classification.

Dans un autre mode, des caractéristiques techniques sont associées aux documents. Ces caractéristiques techniques reprennent la nature des documents pour indiquer s'il s'agit de textes, ou bien d'images, de vidéo, de documents sonores, ou de documents multimédia comprenant plusieurs natures techniques de documents. Ces caractéristiques techniques permettent d'adapter les outils d'analyse sémantique aux différentes natures de documents à traiter. Par exemple, le procédé utilisera des outils d'analyse d'image pour extraire des concepts présents dans les images faisant partie du document alors que des outils d'analyse textuelle seront utilisés pour les textes du document.

Dans un mode de réalisation, l'étape d'association à au moins un document de données représentatives des concepts présents dans ledit document est réalisée préalablement à la mise en œuvre du procédé. Par exemple, l'étape d'association de concepts aux documents peut être réalisée simultanément avec l'étape d'indexation des documents qui est réalisée régulièrement par les moteurs de recherche.

Dans un autre mode de réalisation, l'étape d'association de données représentatives de concepts présents dans les documents est réalisée pour les documents appartenant à la première liste de documents, obtenue par une requête de recherche par index. Si les documents qui ont été retournés par la requête de recherche n'avaient pas été analysés au préalable et n'avaient donc pas été recherchés pour les concepts présents, cette étape d'association peut être réalisée au moment de la recherche.

L'étape d'obtention d'une première liste de documents correspond à une recherche habituelle de documents à partir d'une requête de recherche en utilisant l'indexation des documents par les termes de la requête. Les documents indexés par les termes de la requête seront conservés dans cette première liste.

Selon un mode de réalisation, qui peut être réalisé alternativement ou cumulativement avec les modes précédents, la deuxième étape d'obtention d'une deuxième liste prend en compte les concepts associés aux documents de la première liste qui sont attachés à des termes de la requête de recherche réalisée durant la première étape d'obtention.

Grâce à ce mode de réalisation, la deuxième étape d'obtention d'une deuxième liste de documents est améliorée. Les termes de la requête utilisée lors de la première étape d'obtention permettent d'obtenir une première liste de documents. Des concepts sont associés à ces documents ; et en particulier, des concepts précis sont associés aux termes précis de la requête de recherche. Les techniques d'analyse sémantique peuvent en effet conserver l'information de l'emplacement dans le document où se trouvait le concept associé. La deuxième étape d'obtention d'une deuxième liste va alors utiliser ces concepts précis, attachés aux termes de la requête de l'utilisateur, car ces concepts correspondent à la sémantique de la recherche menée par l'utilisateur telle qu'exprimée dans les documents trouvés par la requête de recherche par index.

Selon un mode de réalisation, qui peut être réalisé alternativement ou cumulativement avec les modes précédents, les données représentatives de concepts présents dans les documents sont des données parmi les suivantes :
- des listes hiérarchiques comprenant des sous-concepts inclus dans des concepts ;
- des données identifiant des objets uniques traités par les documents.

Grâce à ce mode de réalisation, l'association des documents avec les sujets traités est améliorée. En effet, le mode de réalisation permet d'affiner la découverte et l'utilisation des concepts et des sujets traités par les documents en les organisant de façon hiérarchique. Il est ainsi possible de connaître plus en détail les sujets traités par les documents cherchés.

Il est également possible dans certains cas d'identifier les sujets précis traités par les documents qui peuvent être alors exploités. Dans certains cas, par exemple dans le cas d'une base de petites annonces, un document traite d'un objet précis. Les outils d'analyse sémantiques peuvent identifier que différents documents traitent en réalité d'un même objet. Dans le cas des petites annonces, par exemple, des outils d'analyses d'images peuvent réaliser des analyses des photographies d'illustrations pour détecter que des annonces différentes portent en fait sur le même objet. Ces analyses peuvent être confirmées par l'identité des caractéristiques génériques présentes dans l'annonce, telles que catégorie de l'objet, prix etc. Il est alors utile d'associer aux différents documents traitant du même objet une identification de cet objet. L'identifiant choisi pour identifier l'objet peut être aléatoirement généré par le procédé.

Selon un mode de réalisation, qui peut être réalisé alternativement ou cumulativement avec les modes précédents, l'association à un document de données représentatives comprend :
- chapitrer le document, les données représentatives de concepts étant associées aux différents chapitres identifiés dans le document en fonction de l'endroit où les concepts se trouvent dans le document.

Grâce à ce mode de réalisation, l'association des documents avec les sujets traités est encore améliorée. En effet, l'attachement de sujets ou de sous-sujets à des chapitres précis de documents permet de mieux décrire le traitement des sujets par les documents analysés. Cette information permettra aux utilisateurs de mieux percevoir l'intérêt des documents pour répondre à leurs recherches. Les classifications techniques de types de documents peuvent aussi être utilisées ici pour indiquer qu'un document est composé de texte, divisé en différents paragraphes, mais aussi en photos, documents sonores, documents vidéos etc.

Selon un mode de réalisation, qui peut être réalisé alternativement ou cumulativement avec les modes précédents, le procédé comprend :
- obtenir une première liste de documents parmi l'ensemble, la première liste étant le résultat d'une requête de recherche par index.

Selon un mode de réalisation, qui peut être réalisé alternativement ou cumulativement avec le mode précédent, l'obtention d'une deuxième liste de documents prend en compte les concepts associés aux documents de la première liste qui sont attachés à des termes de la requête de recherche réalisée durant l'obtention de la première liste.

Ces modes de réalisation permettent de combiner les résultats classiques d'une recherche par index, qui permet d'obtenir la première liste de documents, avec l'utilisation de concepts présents dans les documents qui va améliorer cette première recherche. En particulier, la prise en compte des concepts associés aux termes de la requête de recherche par index permet d'élargir cette requête à des concepts pouvant avoir plusieurs synonymes, pas forcément présents dans la requête.

Selon un mode de réalisation, qui peut être réalisé alternativement ou cumulativement avec le mode précédent, l'étape d'association comprend un chapitrage des documents et la deuxième étape d'obtention prend en compte uniquement les concepts présents dans les chapitres dans lesquels se trouvent des termes de la requête de recherche utilisée dans la première étape d'obtention.

Grâce à ce mode de réalisation, la deuxième étape d'obtention d'une liste se fait bien en utilisant des concepts tels qu'ils étaient attendus par l'utilisateur puisque cette deuxième étape d'obtention se fait en utilisant les concepts présents dans les chapitres dans lesquels se trouvent les termes de la requête utilisée lors de la première étape d'obtention.

Dans un mode de réalisation, le chapitrage prend en compte des parties de documents qui sont des références ou des liens vers d'autres documents. Dans un mode de réalisation, des concepts associés aux documents pointés par ces liens sont également associés au document comprenant le lien.

Selon un mode de réalisation, qui peut être réalisé alternativement ou cumulativement avec les modes précédents, la première liste de documents obtenue comme résultat d'une requête de recherche par index est une liste ordonnée selon un score de pertinence donné aux documents par l'algorithme de recherche par index.

Grâce à ce mode de réalisation, les avantages emmenés par une recherche classique de documents sont bien conservés pour les utilisateurs du procédé selon l'invention. La pertinence des documents par rapport à une recherche par index est évaluée par exemple par le nombre de mots clés présents dans le document ou par des notions de popularité des pages. Ces éléments d'ordonnancement des résultats de la recherche de documents restent pertinents dans notre procédé et peuvent être utilisés.

Dans un mode de réalisation, l'utilisateur qui a fourni les termes de la requête de recherche par index indique les parties pertinentes des listes obtenues par la première ou la deuxième étape d'obtention. Ces parties pertinentes peuvent correspondre à différents chapitrages des documents. De cette manière, la pertinence des résultats est améliorée par des retours directs de l'utilisateur, ce qui permet de mieux cerner sa requête.

Selon un mode de réalisation, qui peut être réalisé alternativement ou cumulativement avec les modes précédents, l'obtention de la deuxième liste de documents comprend une ou plusieurs des étapes suivantes :
- ajouter à la première liste de documents des documents parmi l'ensemble dont les concepts associés correspondent à ceux de documents déjà présents dans la première liste ;
- supprimer un document quand les concepts associés au document correspondent à ceux associés à un autre document ;
- mettre en relation un premier document avec un deuxième document en fonction des concepts associés au deuxième document qui sont complémentaires des concepts du premier document ;
- consulter la pertinence des documents de la liste par l'utilisateur du procédé ;
- indiquer la pertinence des documents de la liste par l'utilisateur du procédé.

Grâce à ce mode de réalisation, les résultats d'une requête de recherche par index sont améliorés en utilisant une ou plusieurs optimisations possibles.

L'ajout de documents qui n'ont pas été remontés par la première recherche, ou qui ont été remontés à un niveau de visibilité faible, mais qui traitent des mêmes sujets que des documents obtenus dans la première liste à un niveau de visibilité élevé, permet de compléter la première recherche en utilisant les concepts présents dans les documents. De cette manière, le procédé selon l'invention permet de garantir que l'ensemble des documents traitant un même sujet sera bien visible pour un utilisateur du procédé selon l'invention.

De manière symétrique, ce mode de réalisation du procédé permet effectivement de supprimer les documents doublonnés des résultats d'une recherche. Quand plusieurs documents traitent des mêmes sujets, un seul document sera conservé parmi ces différents documents. Les documents qui traitent un sous-ensemble des sujets d'un document plus complet seront ainsi retirés. En cas d'égalité des sujets traités, un seul document sera conservé, par exemple celui qui était le mieux classé dans l'étape d'obtention d'une liste ordonnée de documents qui correspond à une recherche classique en utilisant des termes indexés. Le mode de réalisation permet donc d'améliorer fortement les résultats de la recherche de documents en ne conservant qu'un seul document associé à une liste précise de sujets traités.

De plus, il est possible grâce à une étape retenue ici de mettre en regard d'un premier document un deuxième document en fonction des concepts présents dans les documents, c'est-à-dire des sujets traités par les documents respectifs. Cette mise en relation se fait si les sujets traités par le deuxième document sont complémentaires de ceux traités par le premier document. Par exemple, les documents en question peuvent être des notices d'information financière, le premier document peut avoir parmi ses sujets traités le chiffre d'affaires d'une entreprise pour l'année courante et le deuxième document peut avoir parmi ses sujets traités les perspectives de marché de la même entreprise pour l'année prochaine. Le deuxième document traite un sujet complémentaire ou un sous-sujet de celui présent dans le premier et la mise en relation du deuxième document avec le premier dans la liste de résultats permettra à l'utilisateur d'obtenir un meilleur résultat pour sa recherche. Par exemple, si le sujet traité est le résultat financier au 3ème trimestre 2024 d'une entreprise donnée, des sous sujets possibles seront les différents chiffres d'affaire pour différentes zones géographiques ou pour différentes filiales de l'entreprise en question. Des sujets complémentaires possibles seront les perspectives sur l'ensemble de l'année 2024, l'évolution de la valorisation boursière de l'entreprise à la suite de ces résultats, la nomination d'un dirigeant de l'entreprise, la comparaison avec d'autres entreprises du même secteur etc.

Enfin, l'invention affine les résultats de la recherche en mettant en avant des documents qui n'ont pas encore été consultés par l'utilisateur. Il est également possible de retrouver les concepts associés à des documents jugés comme pertinents par l'utilisateur et de mettre en avant d'autres documents comprenant les mêmes concepts. De cette manière, les documents les plus pertinents pour l'utilisateur lui sont bien présentés.

Selon un mode de réalisation, le procédé comprend :
- regrouper des documents associés aux mêmes concepts dans un même groupe, un document étant sélectionné dans ledit même groupe selon la pertinence des documents de la première liste résultant de la recherche par index.

Grâce à ce mode de réalisation, le procédé évite de présenter un trop grand nombre de documents. Il permet aux utilisateurs le souhaitant un gain notable en terme de temps de consultation en leur épargnant la consultation de documents n'apportant aucune nouveauté sémantique. Pour un sujet traité précisément, tel qu'identifié par un concept associé à plusieurs documents, ces documents sont regroupés mais un seul d'entre eux sera sélectionné et sera mis en avant pour l'ensemble des documents du groupe. Le document sélectionné sera par exemple celui qui avait la plus forte pertinence lors de la première étape de recherche. Les autres documents du groupe seront accessibles à l'utilisateur, mais de manière moins visible.

Selon un premier aspect matériel, l'invention se rapporte à un gestionnaire de recherche de documents parmi un ensemble de documents, les documents étant indexés, le gestionnaire de recherche comprenant :
- un deuxième moteur de recherche apte à obtenir une deuxième liste de documents à partir d'une première liste de documents en prenant en compte un concept présent dans un document de la première liste, les documents de la première liste résultant d'une recherche par index parmi l'ensemble de documents.

Selon un mode de réalisation de cet aspect matériel, le gestionnaire de recherche comprend :
- un coupleur apte à associer à au moins un document de l'ensemble une ou plusieurs données représentative de concepts présents dans ledit document.

Selon un mode de réalisation, qui peut être réalisé alternativement ou cumulativement avec le mode précédent, le gestionnaire de recherche comprend :
- un premier moteur de recherche apte à obtenir une première liste de documents parmi l'ensemble, la première liste étant le résultat d'une requête de recherche par index.

Selon un autre aspect matériel, l'invention a trait à un programme d'ordinateur apte à être mis en œuvre par une entité de gestion, le programme comprenant des instructions de code qui, lorsqu'il est exécuté par un processeur, réalise les étapes du procédé de gestion de la recherche de documents défini ci-dessus.

Selon un autre aspect matériel, l'invention a trait à un support de données sur lequel est enregistré un programme d'ordinateur comprenant des séquences d'instructions pour la mise en œuvre du procédé de gestion de la recherche de documents défini ci-dessus.

Les supports de données peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique tel qu'un un disque dur. D'autre part, les supports peuvent être des supports transmissibles tels qu'un signal électrique ou optique, qui peuvent être acheminés via un câble électrique ou optique, par radio ou par d'autres moyens. Les programmes selon l'invention peuvent être en particulier téléchargés sur un réseau de type Internet. Alternativement, le support d'informations peut être un circuit intégré dans lequel le programme est incorporé, le circuit étant adapté pour exécuter ou pour être utilisé dans l'exécution du procédé en question. Le programme selon l'invention peut utiliser tout type de technologie informatique en terme de langages de programmation compilés, interprétés, ou une combinaison des deux ainsi qu'en terme de systèmes d'exploitation.

### Brève description des figures

L'invention sera mieux comprise à la lecture de la description qui suit, donnée à titre d'exemple, et faite en référence aux dessins annexés sur lesquels :
[Fig 1] représente un gestionnaire de recherche mettant en œuvre le procédé selon l'invention.
[Fig 2] illustre un exemple d'étapes mises en œuvre dans le cadre d'un mode de réalisation de l'invention.

### Description détaillée

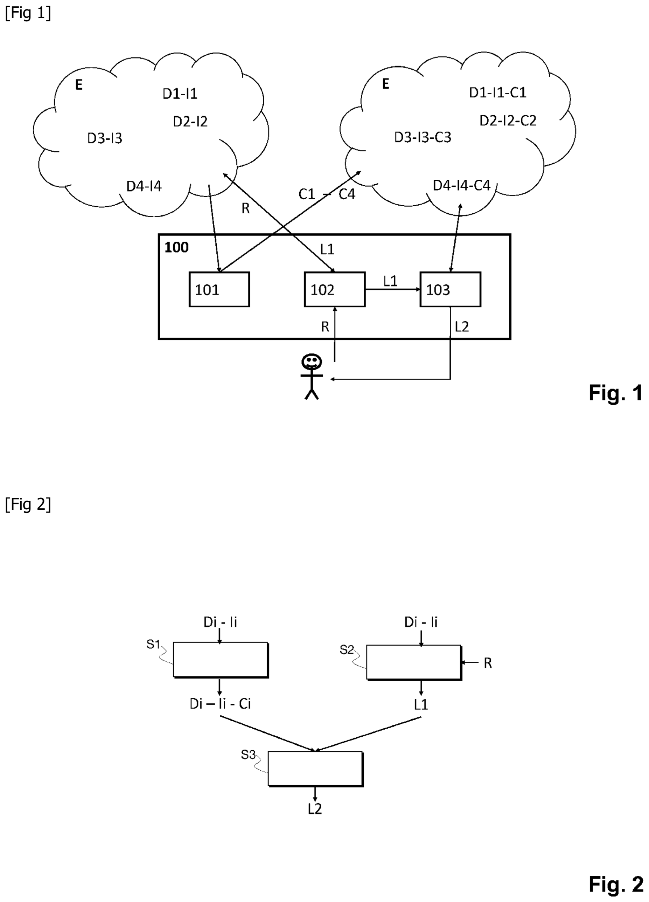

La figure 1 représente un gestionnaire de recherche 100 mettant en œuvre un procédé de gestion de la recherche de documents parmi un ensemble E de documents selon un exemple de réalisation.

L'ensemble E de documents peut par exemple être un ensemble de documents accessible sur Internet ou bien être un ensemble de documents plus restreint comme un ensemble de petites annonces ou un ensemble de dépêches d'agence. Les documents D1 à D4 de l'ensemble E sont indexés, c'est-à-dire que leur sont associés des index I1 à I4 regroupant des termes de recherche possibles présents dans les documents. Grâce à l'indexation, préalable à la mise en œuvre de l'invention et ne faisant pas partie de celle-là, il est possible de répondre aisément à la question de savoir si un terme est présent dans un document donné.

L'entité de gestion 100 comprend, dans cet exemple de réalisation :
- Un coupleur 101 apte à associer aux documents D1 à D4 de l'ensemble E des données représentatives C1 à C4 de concepts présents dans les documents ;
- Un premier moteur de recherche 102 apte à obtenir une première liste L1 de documents parmi l'ensemble E ;
- Un deuxième moteur de recherche 103 apte à obtenir une deuxième liste L2 de documents à partir de la première liste L1 en prenant en compte un concept (C1 à C4) présent dans un document de la première liste (L1).

Dans d'autres exemples de réalisation, l'entité de gestion 100 ne comprend que le deuxième moteur de recherche 103 et les fonctionnalités remplies par le coupleur 101 et le premier moteur de recherche 102 peuvent être rendues par des entités situées en dehors du gestionnaire de recherche 100.

Le gestionnaire de recherche 100 présente l'architecture matérielle d'un ordinateur conventionnel. Il comporte notamment un processeur, une mémoire vive de type RAM et une mémoire morte telle qu'une mémoire de type Flash, ROM, (non représentés sur la figure) ainsi que des dispositifs d'entrée-sortie tels que, dans certains cas, des claviers et/ou écrans (non représentés sur la figure), et des ports réseaux permettant de communiquer avec d'autres entités et serveurs grâce à un réseau de communication tel qu'Internet non représenté sur la figure. Le gestionnaire 100 peut être un serveur informatique mettant en œuvre un procédé de recherche de documents. Le gestionnaire 100 peut également être un terminal mobile mettant en œuvre le même procédé de recherche de documents. Le gestionnaire 100 peut être un ordinateur de bureau ou portable mettant en œuvre le procédé de l'invention. Le gestionnaire 100 peut également être déployé dans une architecture informatique en nuage (traduction de l'anglais *cloud architecture*) et ne pas être attaché à des ressources matérielles figées une fois pour toutes mais au contraire s'exécuter à la demande sur différentes ressources matérielles, en fonction des disponibilités de l'architecture en nuage.

Le coupleur 101 met en œuvre l'étape d'association aux documents D1 à D4 de données C1 à C4 représentatives de concepts présents dans les documents respectifs qui est présente dans certains modes de réalisation du procédé. Nous dirons parfois plus directement que C1 à C4 sont des concepts présents dans les documents D1 à D4 qui correspondent à des sujets traités par ces documents respectifs. Dans l'exemple de la figure 1, une seule donnée est associée à chaque document mais il ne s'agit en aucun cas du cas général. Le procédé va en général associer plusieurs données, donc concepts, à chaque document de l'ensemble E. Dans d'autres modes de réalisation, l'association peut être réalisée par une entité externe au gestionnaire de recherche 100 ou bien les concepts présents dans les documents peuvent être recherchés à la volée sans être nécessairement associés aux documents.

Une donnée représentative d'un concept présent dans un document est obtenue par divers moyens mis en œuvre par le coupleur 101, et en particulier des moyens d'analyse sémantique issues de l'intelligence artificielle. Ces moyens permettent de réaliser une analyse sémantique des documents de l'ensemble E afin d'extraire les différents concepts présents et sujets traités par les documents .

Une donnée représentative d'un concept peut prendre plusieurs formes selon les moyens d'analyse sémantique utilisés. Dans un premier exemple, les concepts sont représentés par des instances de classifications décrivant les sujets traités de façon hiérarchique. De telles instances seront par exemple des chaînes de caractères ou tout autre objet informatique approprié. Une telle classification peut être donnée au préalable, ou bien découverte par des outils d'analyse des documents de l'ensemble E. Une classification peut exister au préalable et donner une structure générale aux documents présents dans l'ensemble E : ce sera par exemple le cas quand l'ensemble E est restreint (site de petites annonces, de dépêches d'agence, de résultats sportifs etc.). Cette classification préalable pourra alors être affinée par les outils d'analyse sémantique qui découvrent de nouveaux concepts dans les documents, attachés à des sujets plus larges présents dans la classification préalable.

Un autre exemple de données représentatives de concepts sont des éléments décrits dans un langage de représentation sémantique tel que AMR ou OWL ou RDFS (acronyme de *Resource Description Framework Schema*). De tels langages sont dédiés à la représentation de concepts qui peuvent être organisés en ontologies. Les éléments décrits dans ces langages se concrétisent dans des objets informatiques tels que des fichiers XML ou des chaînes de caractères.

Un autre exemple de données représentatives de concepts sont des plongements (traduction de l'anglais *embeddings*), c'est-à-dire des vecteurs de nombres réels. De telles données sémantiques correspondent à des résultats d'apprentissage de coefficients de réseaux de neurones artificiels. Ces vecteurs sont de grande dimension, à savoir plusieurs centaines de nombres réels. Leur représentation informatique utilisera par exemple des types de données permettant de représenter des nombres réels, comme des éléments du type *float 32* (réels encodés sur 32 bits).

Selon les données représentatives utilisées, différents moyens permettent de décider si deux données représentatives différentes correspondent à un même concept. Quand ces données sont des objets informatiques tels que des chaînes de caractère ou des instances d'un langage, la manière de décider peut être l'égalité des objets informatiques en question. Des termes synonymes peuvent être considérés comme identiques, en utilisant un dictionnaire de synonymes afin de bien identifier les concepts sous-jacents. Dans le cas de données représentatives numériques, tels des plongements, une notion de distance appropriée peut être définie, afin de décider que des données représentatives distinctes mais dont la distance entre elles est inférieure à un seuil donnée représentent le même concept. Une telle distance choisie peut être la similarité cosinus mais d'autres distances peuvent être choisies.

Les moyens d'analyse sémantique sont d'abord des moyens d'analyse textuelle. De tels moyens vont d'abord procéder à une analyse syntaxique des textes du document pour en extraire les différentes phrases. Des analyses grammaticales et de vocabulaires permettent ensuite d'extraire les différents concepts exprimés dans les parties textuelles du document et en particulier les sujets traités. Les moyens d'analyse sémantique permettent de rattacher à des parties précises du document les concepts présents dans celui-ci.

Les moyens d'analyse sémantique peuvent être aussi des moyens d'analyse d'images. Dans l'analyse de documents du type petites annonces, l'analyse d'images peut permettre d'identifier que des documents utilisant des présentations textuelles différentes concernent en fait le même objet.

Des moyens d'analyse sémantique réalisent un chapitrage des documents, c'est-à-dire qu'ils les découpent en parties cohérentes, par exemple les différents paragraphes des textes, mais aussi des sous-paragraphes si un même paragraphe évoque plusieurs concepts non liés entre eux. Les concepts associés aux documents peuvent donc être, dans des modes de réalisation, associés à des parties précises des documents analysés.

Les concepts associés aux différents documents pourront être enregistrés dans une structure de données appropriée, de façon à conserver en mémoire l'information de cette association de façon pérenne. Il est cependant possible de ne pas enregistrer les données représentatives de concepts associées aux documents de l'ensemble E. Les concepts associés peuvent être uniquement utilisés pour regrouper et rapprocher entre eux des documents de l'ensemble E. Dans ce cas, il n'est pas nécessaire d'enregistrer de façon explicite quelles sont les données représentatives de concepts associées aux documents.

Le premier moteur de recherche 102 réalise une recherche de documents parmi les documents de l'ensemble E selon les termes d'une requête R fournie par un utilisateur. Les termes présents dans les documents D1 à D4 de l'ensemble E ont été au préalable indexés, ce qui assure une exécution rapide de la recherche par le moteur 102. La recherche ainsi réalisée utilise les techniques de recherche de l'état de l'art pour obtenir une liste de documents L1 répondant à la requête. Selon les algorithmes de recherche utilisés, la liste L1 peut être ordonnée ou non. Des scores de pertinence peuvent être ou non attribués aux différents documents de la liste L1.

Dans des exemples de réalisation, le premier moteur de recherche 102 est extérieur au gestionnaire de recherche 100.

Le deuxième moteur de recherche 103 va obtenir une deuxième liste de documents L2, plus pertinente quant à la recherche de l'utilisateur, en partant de la liste L1 obtenue par le moteur 102 et en prenant en compte les concepts présents dans les documents de l'ensemble E. Pour reprendre une terminologie linguistique, alors que les techniques existantes de recherche de documents par termes indexés en restent au signifiant, le procédé selon l'invention utilise le signifié du document, les concepts présents dans celui-ci, pour améliorer la recherche.

Plusieurs améliorations peuvent être mises en œuvre par le moteur 103 pour produire la liste L2 à partir de la liste L1.

La première amélioration va consister en compléter des documents de la liste L1 par d'autres documents qui n'avaient pas été remontés par la recherche menée par le premier moteur 102. Ces documents complémentaires sont ceux qui traitent des mêmes sujets mais en utilisant des termes absents de la recherche. De cette façon, le procédé permet de trouver les documents dans l'ensemble E qui traitent d'un même sujet et cela même si l'utilisateur a utilisé dans sa requête des termes absents des documents en question. Dans des exemples, la liste L2 de documents affiche explicitement les concepts associés aux documents afin que l'utilisateur puisse se rendre compte des concepts trouvés par le procédé dans les documents remontés par suite de la recherche R dont les termes ont été fournis par l'utilisateur.

Il est également possible de chapitrer les documents de la première liste L1. La deuxième étape d'obtention prend en compte uniquement les concepts présents dans les chapitres dans lesquels se trouvent des termes de la requête de recherche utilisée dans la première étape d'obtention. De cette manière, le procédé assure que les concepts associés sont bien ceux que l'utilisateur avait en tête lorsqu'il effectue sa recherche. Un concept qui est inclus dans un autre concept, quand ceux-ci peuvent être organisés de façon hiérarchique, comme c'est le cas pour les classifications, pourra être pris en compte dans des documents de la liste L2, même si le concept parent en lui-même n'est pas présent dans un document de la liste L2.

La présentation de la liste L2 peut mettre en avant l'ordre des concepts présents dans les documents, et leur organisation hiérarchique, lorsque les documents de la liste L2 sont affichés à l'utilisateur.

Un autre exemple d'amélioration est la suppression de documents doublonnés dans la liste L1. Des documents qui présentent des concepts identiques avec de simples différences de forme peuvent être détectés dans la liste L1 en comparant les concepts qui ont été associés aux documents par le coupleur 101.

Les différentes améliorations possibles permettant d'obtenir la liste L2 de documents peuvent prendre en compte les scores de pertinence remontés par l'étape de recherche menée par le premier moteur 102 et qui permet d'obtenir la première liste L1.

La figure 2, quant à elle, illustre un exemple d'étapes mises en œuvre dans le cadre d'un mode de réalisation de l'invention.

Cet exemple est donné dans le cadre d'une application du procédé pour améliorer la recherche de documents dans un ensemble E qui est un site de dépêches d'agence.

La première étape S1 est mise en œuvre par le coupleur 101 de l'entité de gestion 100. Dans cet exemple, les données représentatives de concepts trouvées dans les documents Di sont des classifications Ci, associées durant cette étape par le coupleur 101 aux différents documents Di de l'ensemble E. Ces documents sont déjà indexés, c'est-à-dire associés à des index Ii qui comprennent les termes présents dans les documents Di. Les classifications Ci seront dans cet exemple des catégorisations des dépêches d'agence, par exemple « économie », « politique » etc. Une classification préalable sera raffinée en analysant les contenus des documents. Par exemple, la catégorie large « économie » pourra se subdiviser en « résultats des entreprises » ou en « statistiques », catégorie qui va elle-même se subdiviser en « chiffres du PIB », « chiffres du chômage » avec des indications pour les différents pays, pour les différentes dates etc.

La deuxième étape S2 est mise en œuvre par le premier moteur de recherche 102. Il s'agit d'une recherche selon les termes d'une requête. Les documents pour lesquels les termes sont présents dans les index Ii vont donc être remontés par cette recherche, ce qui permet d'obtenir la liste L1. Cette recherche utilise des méthodes connues. Un exemple de requête d'un utilisateur pourrait être par exemple « PIB France 2024 ». Des documents dans lesquels se trouvent les termes en question seront alors présents dans la liste L1.

Comme indiqué par la figure 2, l'ordre des étapes S1 et S2 n'est pas déterminé. Dans des exemples de réalisation, l'ensemble des documents Di de l'ensemble E sont analysés et associés à des classifications Ci au fur et à mesure de leur intégration dans l'ensemble E. L'étape S1 est dans cet exemple préalable à la mise en œuvre du procédé. Dans un autre exemple, l'étape S1 peut être réalisée après l'étape S2 pour seulement analyser les documents remontés dans la liste L1.

La troisième étape S3 correspond à l'amélioration des résultats de la recherche réalisée en S2 en prenant en compte les concepts trouvés et associés aux documents Di durant l'étape S1. Les documents remontés dans la liste L1 pour la requête de l'utilisateur « PIB France 2024 » comprendront certainement des documents dont les classifications associées sont « économie » / « statistiques » / « chiffres du PIB » / « France ». Dans des exemples de mise en œuvre de l'étape S3, un seul parmi ces documents peut être choisi. Selon les préférences de l'utilisateur, les documents choisis par l'étape S3, peuvent être des documents plus complets, qui présentent en plus des statistiques pour d'autres dates, afin de réaliser des comparaisons temporelles, ou pour d'autres pays, afin de réaliser des comparaisons géographiques. Des concepts explicatifs des statistiques peuvent également être associés à d'autres documents qui sont rapprochés durant l'étape S3. Finalement, le procédé selon l'invention permet à la fois de sélectionner un seul document parmi plusieurs quand les concepts sont identiques, afin d'éviter les redites de documents dans la liste L2, et de sélectionner des documents présentant des concepts complémentaires de ceux associés à la requête initiale afin de compléter la liste L1 par de nouveaux documents dans la liste L2.

Signalons enfin ici que, dans le présent texte, les différents composants du gestionnaire de recherche (coupleur et moteur de recherche) peuvent correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour le composant concerné. De la même manière, un composant matériel correspond à tout élément d'un ensemble matériel (ou hardware) apte à mettre en œuvre une fonction ou un ensemble de fonctions pour le composant concerné (circuit intégré, carte à puce, carte à mémoire, etc.).

## Revendications

1. Procédé de gestion de la recherche de documents (D1 à D4) parmi un ensemble (E) de documents, les documents étant indexés (I1 à I4), le procédé comprenant :
- obtenir une deuxième liste (L2) de documents à partir d'une première liste (L1) de documents en prenant en compte un concept (C1 à C4) présent dans un document (D1 à D4) de la première liste, les documents de la première liste résultant d'une recherche par index parmi l'ensemble (E) de documents.

2. Procédé de gestion de la recherche de documents selon la revendication 1 **caractérisé en ce que** l'obtention de de la deuxième liste de documents est fonction de données (C1 à C4) représentatives de concepts présents dans les documents de la première liste.

3. Procédé de gestion de la recherche de documents selon la revendication 2 **caractérisé en ce que** le procédé comprend :
- associer à au moins un document de l'ensemble (E) au moins une donnée (C1 à C4) représentative de concepts présents dans ledit document.

4. Procédé de gestion de la recherche de documents selon la revendication 3 **caractérisé en ce que** l'association comprend le regroupement de plusieurs documents quand un même concept est présent dans lesdits plusieurs documents.

5. Procédé de gestion de la recherche de documents selon l'une des revendications 2 à 4 **caractérisé en ce que** les données représentatives de concepts présents dans les documents sont des données parmi les suivantes :
- des listes hiérarchiques comprenant des sous-concepts inclus dans des concepts ;
- des données identifiant des objets uniques traités par les documents.

6. Procédé de gestion de la recherche de documents selon l'une des revendications 3 à 5 **caractérisé en ce que** l'association à un document de données représentatives comprend :
- chapitrer le document, les données représentatives de concepts (C1 à C4) étant associées aux différents chapitres identifiés dans le document en fonction de l'endroit où les concepts se trouvent dans le document.

7. Procédé de gestion de la recherche de documents selon l'une des revendications 1 à 6, **caractérisé en ce que** le procédé comprend :
- obtenir une première liste (L1) de documents parmi l'ensemble (E), la première liste (L1) étant le résultat d'une requête (R) de recherche par index.

8. Procédé de gestion de la recherche de documents selon la revendication 7 **caractérisé en ce que** l'obtention d'une deuxième liste de documents (L2) prend en compte les concepts associés aux documents de la première liste (L1) qui sont attachés à des termes de la requête (R) de recherche réalisée durant l'obtention de la première liste.

9. Procédé de gestion de la recherche de documents selon l'une des revendications 7 ou 8 **caractérisé en ce que** l'association comprend un chapitrage des documents et **en ce que** l'obtention de la deuxième liste de documents prend en compte uniquement les concepts présents dans les chapitres dans lesquels se trouvent des termes de la requête (R) de recherche utilisée dans l'obtention de la première liste de documents.

10. Procédé de gestion de la recherche de documents selon l'une des revendications 1 à 9 **caractérisé en ce que** l'obtention de la deuxième liste (L2) de documents comprend une ou plusieurs des étapes suivantes :
- ajouter à la première liste de documents (L1) des documents parmi l'ensemble (E) dont les concepts associés correspondent à ceux de documents déjà présents dans la première liste (L1) ;
- supprimer un document quand les concepts associés au document correspondent à ceux associés à un autre document ;
- mettre en relation un premier document avec un deuxième document en fonction des concepts associés au deuxième document qui sont complémentaires des concepts du premier document ;
- consulter la pertinence des documents de la liste par l'utilisateur du procédé ;
- indiquer la pertinence des documents de la liste par l'utilisateur du procédé.

11. Procédé de gestion de la recherche de documents selon l'une des revendications 1 à 10 **caractérisé en ce que** l'obtention de la deuxième liste (L2) de documents comprend :
- regrouper des documents associés aux mêmes concepts dans un même groupe, un document étant sélectionné dans ledit même groupe selon la pertinence des documents de la première liste résultant de la recherche par index.

12. Gestionnaire de recherche (100) de documents parmi un ensemble (E) de documents, les documents (D1 à D4) étant indexés (I1 à I4), le gestionnaire de recherche (100) comprenant :
- un deuxième moteur de recherche (103) apte à obtenir une deuxième liste (L2) de documents à partir d'une première liste de documents (L1) en prenant en compte un concept (C1 à C4) présent dans un document (D1 à D4) de la première liste, les documents de la première liste résultant d'une recherche par index parmi l'ensemble (E) de documents.

13. Gestionnaire de recherche selon la revendication 12 comprenant :
- un coupleur (101) apte à associer à au moins un document de l'ensemble (E) une ou plusieurs données (C1 à C4) représentative de concepts présents dans ledit document.

14. Gestionnaire de recherche selon l'une des revendications 12 ou 13 comprenant :
- un premier moteur de recherche (102) apte à obtenir une première liste (L1) de documents parmi l'ensemble (E), la première liste (L1) étant le résultat d'une requête (R) de recherche par index.

15. Programme d'ordinateur apte à être mis en œuvre par un gestionnaire de recherche (100), le programme comprenant des instructions de code qui, lorsqu'il est exécuté par un processeur, réalise les étapes du procédé de gestion de la recherche de documents selon la revendication 1.

16. Support de données sur lequel est enregistré un programme d'ordinateur comprenant des séquences d'instructions pour la mise en œuvre du procédé de gestion de la recherche de documents selon la revendication 1.
